# EUROPÄISCHE PATENTANMELDUNG

(11) **EP 0 660 995 A1**
(43) Veröffentlichungstag der Anmeldung: **05.07.1995**
(21) Anmeldenummer: 94119452.4
(22) Anmeldetag: 09.12.1994
(51) Int. Cl.: A01B 1/16

(54) **Werkzeug zum Entfernen von Unkraut**

(30) Priorität: 28.12.1993 BE 9301475
(71) Anmelder: GARDENA Kress + Kastner GmbH, D-89079 Ulm (DE)
(72) Erfinder:
(74) Vertreter: Patentanwälte Ruff, Beier, Schöndorf und Mütschele

(57) **Zusammenfassung**

Zum Entfernen von Unkraut (2) mit tiefreichenden Wurzeln aus Rasenflächen ist ein Werkzeug (1) vorgesehen, das generell rohrförmig mit einer Verjüngung zu seiner unteren Schneide aufweist. Das Innere des zylindrischen, an den konischen Ausstichabschnitt (4) anschließenden Rohres (6) bildet ein Magazin (7) für die Ausstiche, die in diesem nach oben wandern und durch eine Austrittsöffnung (8) am oberen Teil des Werkzeugs entleert werden können. Ein Handgriff (26) und ein Trittsteg (27) erleichtern die Arbeit.

## Beschreibung

Die Erfindung betrifft ein Werkzeug zum Entfernen von Unkraut, vorzugsweise von tiefwurzelndem Unkraut. Insbesondere ist das Werkzeug zum Entfernen von Unkraut aus Rasen vorgesehen, jedoch auch zum Entfernen anderen Unkrauts und an anderen Stellen anzuwenden.

Unkraut, das hauptsächlich Wurzelwuchs in die Tiefe aufweist, ist schwer zu entfernen, vor allem aus Rasen. Ein Beispiel ist Löwenzahn. Er kann mit einem Messer ausgestochen werden, was jedoch umständlich und mühsam ist.

Aufgabe der Erfindung ist es, ein wesentlich bequemeres und wirksameres Werkzeug zur Unkrautentfernung zu schaffen.

Dies wird durch ein Werkzeug erreicht, das einen einen axialen Ausstichkanal enthaltenden mantelförmigen Stecherabschnitt und einen an den Stecherabschnitt anschließenden Schaftabschnitt aufweist, mit dem der Stecherabschnitt entlang der axialen Richtung des Ausstichkanals in den Boden gedrückt wird. Der Stecherabschnitt wird über der zu entfernenden Pflanze positioniert, in den Boden gedrückt und danach herausgezogen, um die Pflanze mit dem auch die Wurzel enthaltenden Ausstich aus dem Boden zu entfernen.

Das Werkzeug ist sehr einfach zu handhaben, weil eine Stechbewegung genügt. Ein Rütteln oder Kippen des Werkzeuges ist meist nicht notwendig und es entfällt die Gefahr, beim Herausziehen der Pflanze die Wurzel abzureißen, die dann im Boden verbleiben könnte. Das Werkzeug kann einfach und kostengünstig hergestellt werden. Wartung ist kaum nötig.

Besonders bevorzugt ist das Werkzeug mit einem Magazin oder Sammelbehälter für den Ausstich versehen, der sich an den axialen Ausstichkanal anschließt. So können unterschiedliche Pflanzen nacheinander aus dem Boden entfernt werden, ohne daß das Werkzeug jedesmal freigemacht oder entleert werden muß oder die ausgestochenen Pflanzen auf den Boden fallen. Der Schaft kann ein Rohr sein, das gleichzeitig als Magazin bzw. Behälter dient.

Entsprechend der gewünschten Arbeitsweise kann die Länge des Magazins bzw. Schaftabschnittes gewählt werden. Bei einer kurzen Bauart werden nur ein oder wenige Ausstiche magaziniert. Dieses Werkzeug ist leicht zu positionieren, erfordert aber eine gebückte oder knieende Arbeitsweise. Bei einer längeren Ausführung kann das Magazin länger als 500 mm sein und dementsprechend viele Ausstiche aufnehmen. Die Gesamtlänge des Werkzeugs kann ca. 800 mm betragen, das heißt ein Arbeiten in aufrechter Stellung ermöglichen.

Obwohl es möglich wäre, bei kurzer Bauart das Magazin so zu erweitern, daß die Ausstiche auch nebeneinander aufgenommen werden können, ist es bevorzugt, die meist kreisrunden Ausstiche in einer Reihe hintereinander zu magazinieren. Dabei ist der Innenquerschnitt des Magazins etwas größer als der Ausstichquerschnitt, das heißt der Querschnitt der Ausstichschneide am unteren Ende des Stecherabschnitts. Der Stecherabschnitt kann sich, ggf. anschließend an einen kurzen schneidennahen, zylindrischen Abschnitt, konisch erweitern. Dadurch wird auch erreicht, daß der Ausstich sich nach dem Ausstechen etwas ausdehnen kann und im Stecherabschnitt gehalten wird, so daß er beim Hochziehen des Werkzeuges mitgenommen wird und nicht aus dem Stecherabschnitt wieder herausrutscht. Dabei reißt oder bricht die Erde im Bereich der Schneide ab. Wenn, zum Beispiel durch Wurzelwerk oder besonders schwierige Bodenverhältnisse, dies nicht von allein geschieht, so kann das Werkzeug um seine Achse geschwenkt oder gedreht werden. Zweckmäßig können dann Mittel zur Drehkraftübertragung vom Stecherabschnitt auf den Ausschnitt vorgesehen sein, beispielsweise Längsrippen, die den Stecherabschnitt bei im übrigen regelmäßiger, zum Beispiel kreisförmiger Grundfläche etwas profilieren und dafür sorgen, daß der Ausschnitt sich bei dieser Drehbewegung zusammen mit dem Stecherabschnitt dreht und so den Trennquerschnitt abschert. Diese Rippen können auch der Versteifung des Stecherabschnitts dienen.

Das einzige mechanisch beanspruchte Bauelement ist der untere Teil des Stecherabschnitts, der die Schneide enthält. Dieses kann man als einen ggf. auswechselbaren zugeschärften Schneideinsatz, zum Beispiel aus Stahl, ausbilden, während die übrigen Teile aus Kunststoff oder Aluminiumrohr leicht und korrosionsfest herstellbar sind.

Zur leichten Handhabung kann ein Handgriff, zum Beispiel in einer Bügelform ähnlich eines Spatengriffs, vorgesehen sein. Im Bereich der Durchgrifföffnung kann der obere Austritt des Magazins enden und es kann, auch bei anderen Handgriff-Formen, eine Ausstichumlenkung vorgesehen sein, die eine seitliche Auswurföffnung für die Ausstiche hat. An dieser Stelle konnte auch ein Auffangbehälter angebracht oder angehängt werden, um eine durchgehende Arbeit ohne Notwendigkeit einer Zwischenentleerung zu gewährleisten. Insbesondere für Arbeiten bei schwerem Boden eignet sich ein am Schaftabschnitt angebrachter Steg, um mit dem Fuß die Ausstichkraft aufzubringen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in der Zeichnung dargestellt und werden im einzelnen näher erläutert. Es zeigen:
- Fig. 1: ein Werkzeug in Seitenansicht,
- Fig. 2: das Detail II aus Fig. 1,
- Fig. 3 bis 5: Schnitte entlang den Linien III bis V in Fig. 1,
- Fig. 6 bis 8: Darstellungen der Funktion des Werkzeugs in Darstellungen entsprechend den Fig. 1 und 5, und
- Fig. 9 und 10: teilweise geschnittene Seitenansichten einer Variante.

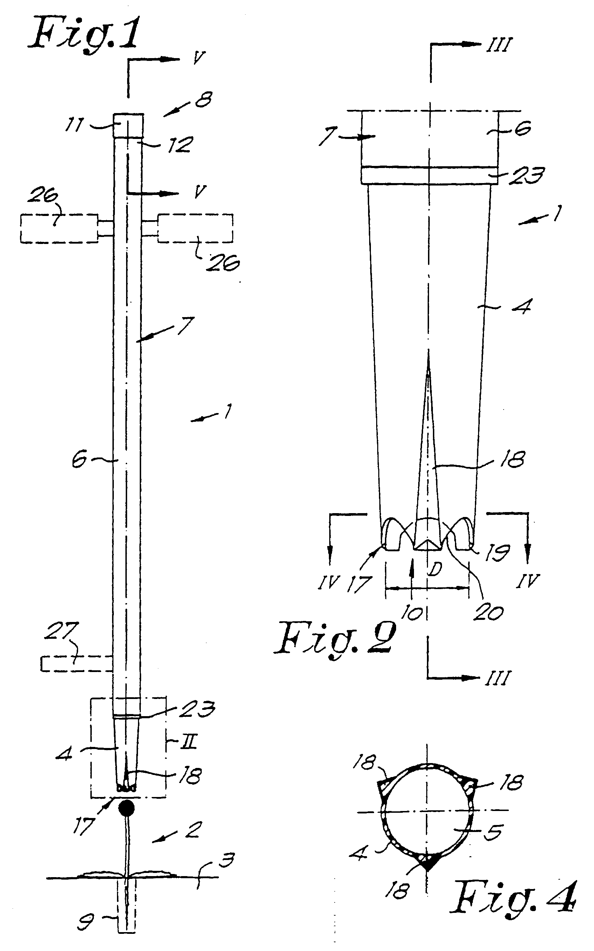

Das in den Figuren 1 bis 8 dargestellte Werkzeug 1 zum Entfernen von Unkraut 2 aus dem Boden 3 hat einen mantelförmigen, das heißt hohlzylindrischen bzw. hohlkonischen Stecherabschnitt 4, der einen axialen Ausstichkanal 5 umgibt. An diesen schließt sich ein an dem Stecherabschnitt 4 angebrachter und an diesen anschließenden Schaftabschnitt 6 an, mittels dessen der Stecherabschnitt entsprechend der axialen Richtung des Ausstichkanals 5 in den Boden gedrückt werden kann.

Das Werkzeug 1 ist mit einem Magazin oder Behälter 7 versehen, das sich an den axialen Ausstichkanal 5 anschließt. In ihm können ein oder mehrere ausgestochene Pflanzen (Ausstiche 9) gesammelt werden, bevor das Werkzeug entleert werden muß. Der Schaftabschnitt 6 besteht hierbei vorzugsweise aus einem Rohr, das gleichzeitig als Magazin 7 dient.

Das Magazin 7 ist mit einem Austritt 8 an seinem oberen Ende zu seiner Entleerung versehen. Damit sich der Ausstich 9, das heißt das ausgestochene Unkraut 2 zusammen mit dem daranhängenden Erd-/Wurzelklumpen bzw. -pfropfen, von dem Stecherabschnitt 4 bis zum Austritt 8 leicht verschieben läßt, ist der Ausstichkanal 5 ab dem Ende des Stecherabschnitts 4 bis zum Austritt 8 gegenüber dem Eingang 10 des Stecherabschnitts erweitert.

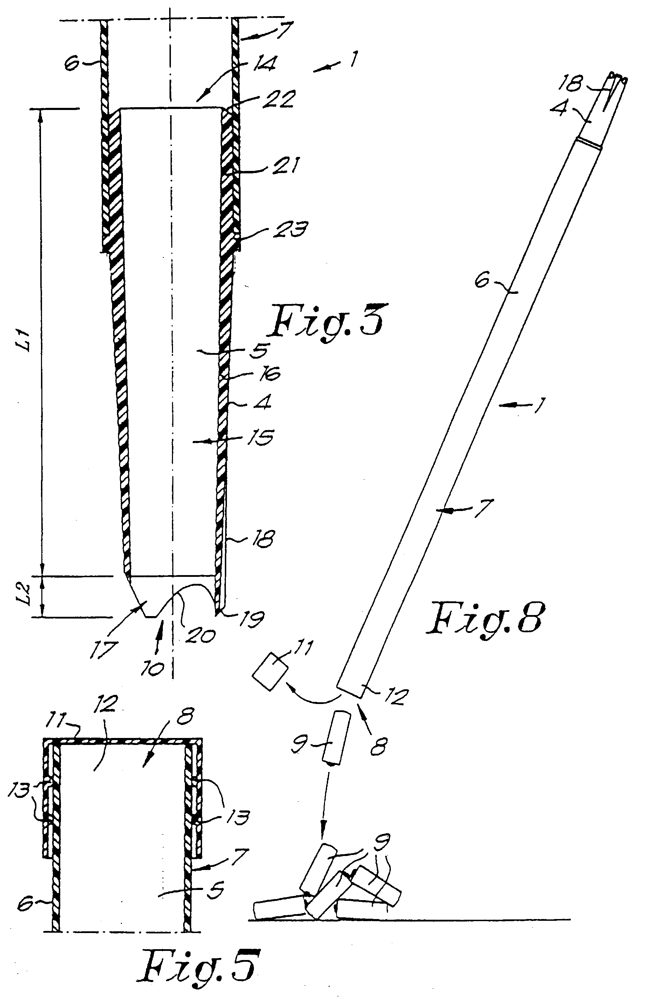

Der Austritt 8 kann mit einem abnehmbaren Abschluß 11 versehen sein, zum Beispiel einer Kappe oder Stopfen (Fig. 1 und 5). Vorzugsweise ist der Verschluß 11 so ausgeführt, daß er einfach auf das betreffende Ende 12 des Schaftabschnitts 6 geschoben werden kann und mit geringer Spannkraft darauf fest sitzen bleibt. Er kann dazu Spannrippen 13 (Fig. 5) aufweisen.

Der Stecherabschnitt 4 sollte im wesentlichen mantel- oder hülsenförmig sein. Zusätzlich kann der Stecherabschnitt 4, um zu verhindern, daß in ihm Verstopfungen entstehen, sich erweitern, so daß der Ausstichkanal 5 am Ausgang des Stecherabschnitts 4 breiter ist als an seinem Eingang 10. Dazu weist der Ausstichkanal 5 einen konisch erweiterten Abschnitt 15 auf, der die Länge L1 hat (Fig. 3). Auch die Außenseite des Stecherabschnitts 4 ist konisch.

Beim Ausführungsbeispiel wird die Wand 16 des Stecherabschnitts 4 vom Eingang 10 zum Ausgang 14 allmählich dicker, so daß der vordere, in den Boden 3 bestechende Abschnitt relativ dünn ist und andererseits aber genug Stabilität verbleibt, um großen Druckkräften zu widerstehen.

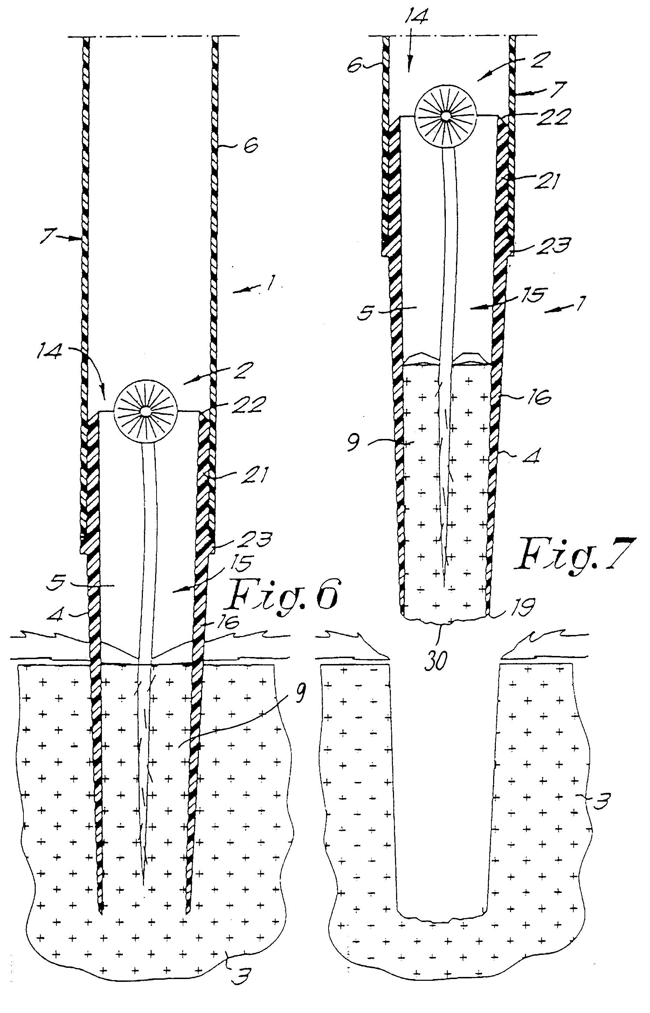

Aus Fig. 3 ist zu erkennen, daß der axiale Ausstichkanal 5 des Stecherabschnitts 4 vorne einen Abschnitt 17 mit konstantem Querschnitt aufweist, der die Länge L2 hat. Dieser zylindrische Teil des Ausstichkanals 5 trägt dazu bei, daß nach dem Einstechen der Ausstich 9 eine gewisse Einklemmung erfährt, um aus dem Boden herausgezogen zu werden, das heißt entlang der Endfläche 30 (Fig. 7) abzureißen. Der Ausstichkanal hat einen im wesentlichen kreisförmigen Querschnitt.

Der Durchmesser D (Fig. 2) des Ausstichkanals 5 beträgt am Eintritt 10 vorzugsweise weniger als 30 mm, um die benötigte Druckkraft und die Größe des Ausstichs 9 zu beschränken. Damit können die Wurzeln der meisten tiefwurzelnden Unkrautarten erfaßt werden.

Insbesondere aus Fig. 4 ist zu erkennen, daß beim Ausführungsbeispiel der Stecherabschnitt 4 mit axial gerichteten Rippen versehen ist, die den Stecherabschnitt versteifen. Rippen 18 verlaufen an der Außenseite der Wand 16 und erstrecken sich, entsprechend der Konizität nach oben auslaufend, vom Eintritt 10 bis zur halben Höhe des Stecherabschnittes 4. Es sind drei Rippen 18 längs der Außenwand 16 vorgesehen.

Gemäß Fig. 2 können die Rippen 18 nach unten hin an Dicke zunehmen, um zu erreichen, daß im vorderen Bereich eine optimale Versteifung bewirkt wird. Die Rippen haben einen dreieckigen Querschnitt und schließen mit einer ihrer Seite an die Wand 16 an. Um ein Eindringen in den Boden zu erleichtern, sind sie unten mit Abschrägungen versehen, die Schneiden 19 bilden.

Die für das Eindringen des Stecherabschnitts 4 in den Boden 3 notwendige Anfangsdruckkraft kann durch z.B. kronenartiges Profilieren des unteren Randes 20 des Stecherabschnitts 4 beschränkt werden. Die einzelnen Abschnitte der Schneide dringen dann nacheinander in den Boden ein. Fig. 2 und 3 zeigen, daß der untere Rand 20 hierzu aus bogenförmigen Zwischenräumen zwischen den jeweiligen Schneiden 19 bestehen kann, die ebenfalls Schneiden bilden. Der Stecherabschnitt 4 besteht bei diesem Ausführungsbeispiel aus einem separaten Teil, das an dem Schaftabschnitt 6 montiert ist. Es ist auf diesen aufgeschoben und eingerastet. Ein außen zylindrischer Kupplungsabschnitt 21 greift in den rohrförmigen Schaftabschnitt 6 ein, was durch eine Einführschräge 22 erleichtert wird. Der Schaftabschnitt 6 stützt sich auf einem vorspringenden Flansch 23 des Stecherabschnittes 4 ab.

Der Stecherabschnitt 4 kann in einer anderen Farbe ausgeführt sein als der Schaftabschnitt 6, damit der Benutzer die bevorzugte Einstichtiefe erkennen kann. Auch andere Markierungen können dazu, ggf. auch nach Einstichtiefe gestaffelt, vorgesehen sein. Fig. 1 zeigt schematisch einen Fußsteg, der am unteren Teil des Schaftabschnittes angebracht ist, um beim Einstechen mit dem Fuß nachzuhelfen, sowie einen Handgriff 26.

Die gesamte Länge des Werkzeugs 1 beträgt vorzugsweise 70 bis 100 cm, was für eine aufrechte Arbeitsweise geeignet ist.

Der Stecherabschnitt, jedoch auch die übrigen Teile des Werkzeuges können aus Kunststoff hergestellt werden. Dabei ist ein besonders fester Kunststoff, beispielsweise mit Glasfaserverstärkung, bevorzugt. Der Stecherabschnitt 4 kann auch durchbrochen sein.

Die Funktion des Werkzeuges ist aus den Fig. 1 und 6 bis 8 zu erkennen. Das Werkzeug wird über dem zu entfernenden Unkraut 2 positioniert (Fig. 1). Danach wird der Stecherabschnitt 4 in den Boden 3 gedrückt, und zwar über den Handgriff 26 und ggf. unterstützt durch Fußdruck auf den Fußsteg 27 (Fig. 6). Beim Zurückziehen des Werkzeuges nach oben bleibt ein das Unkraut 2, die Wurzeln und den Wurzelballen enthaltener Ausstich 9 im Stecherabschnitt hängen, wobei der Boden längs der Abrißfläche 30 abbricht.

Dies kann mehrmals wiederholt werden, ohne daß der Ausstich 9 jedesmal aus dem Werkzeug entfernt werden muß. Der folgende Ausstich drückt den vorherigen in Achsrichtung nach oben in das Magazin 7 hinein, wobei er wegen der Erweiterung des Querschnitts in dieser Richtung wenig Widerstand findet.

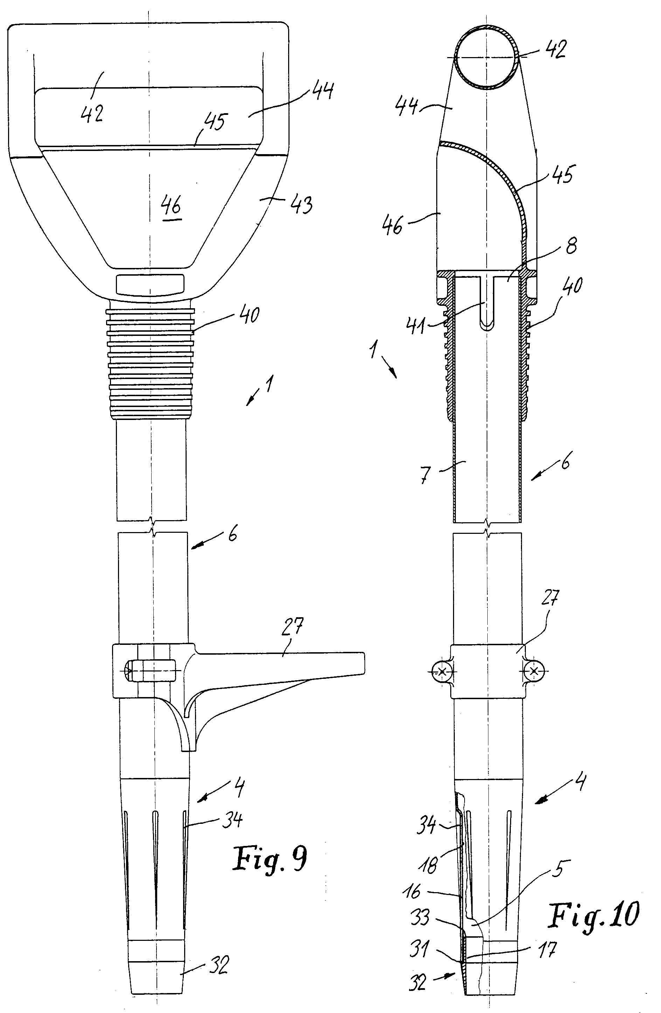

Fig. 8 zeigt die Entleerung des Werkzeugs durch Umkippen und Ausschütten der Ausstiche 9 aus dem Austritt 8.

Die Fig. 9 und 10 zeigen eine bevorzugte Ausführungsform. Gleiche Bezugszeichen bezeichnen gleiche Teile wie bei der vorher beschriebenen Ausführung und zur Erläuterung wird auf die vorherige Beschreibung Bezug genommen.

Stecherabschnitt 4 und Schaftabschnitt 6 bestehen aus einem durchgehenden Aluminiumrohr, das im Bereich des Stecherabschnitts 4 konisch in Richtung auf den Eintritt 10 hin verjüngt ist. Am Eintritt 10 ist ein zu einer Ringschneide 19 zugeschärfter Schneideinsatz 32 aus Stahl in das Rohr fest, jedoch auswechselbar eingeschoben und stützt sich mit einer Stufe 31 auf dem unteren Ende der Rohrwand 16 ab. Das Innere des Schneideinsatzes 32 bildet einen zylindrischen unteren Abschnitt 17 des Ausstichkanals 5 und die obere Kante 33 des Schneideinsatzes bildet eine Art Widerhaken, die das Herausrutschen des Ausstichs 19 beim Hochziehen des Werkzeugs verhindert.

In der Wandung 16 sind von außen nach innen eingeprägte langgestreckte Einsenkungen 34 vorgesehen, die in den Ausstichkanal 5 ragende Längsrippen 18 von etwa dreieckigem Querschnitt bilden. Diese Rippen, von denen beispielsweise sechs am Umfang vorgesehen sein können, erstrecken sich über den in Längsrichtung mittleren Teil des Stecherabschnitts 4 und nehmen vom Eintritt 10 nach oben an Breite und Tiefe zu, wobei jedoch ihre Rückenfläche bzw. ihr Scheitel maximal achsparallel verläuft. Sie haben eine Mehrfachfunktion. Zum einen sind sie bei der Fertigung des sich konisch verjüngenden Rohrabschnittes 4 zur Materialverdrängung vorteilhaft. Zum anderen versteifen sie diesen Abschnitt und schließlich bewirken sie eine gewisse Drehsicherung des Ausstichs 9 in dem Stecherabschnitt 4. Dieser wird zwischen den achsparallelen Rippenrücken geführt, kann sich aber zwischen den Rippen etwas ausdehnen, so daß eine nur die Drehbewegung, aber nicht die Längsbewegung behindernde Verzahnung entsteht. Wenn also der Benutzer merkt, daß sich bei schwierigen Boden- und Verwurzelungsverhältnissen der Ausstich 9 an der Fläche 30 (Fig. 7) schlecht trennen läßt, so kann er das Werkzeug mit der Hand um seine Längsachse drehen und damit den Ausstich an der Trennfläche 30 abscheren.

Es ist zu erkennen, daß in dem zylindrischen Schaftabschnitt 6, der eine Länge von über 500 mm hat, eine große Anzahl von Ausstichen 9 aufgenommen werden können. Die Fußstütze 27 ist nach Art einer Klemmschelle am Schaftabschnitt 6 angebracht. Auf das obere Ende des Schaftabschnitts 6 ist ein Handgriff 26 aufgesetzt, der aus einem Kunststoff-Spritzgußteil besteht. Er ist mit einem außen verrippten Anschlußstutzen 40 versehen, der über das Rohr gesteckt ist und durch eine in Umfangs- und Axialrichtung wirkende Verrastung 41 fest mit dem Rohr verbunden ist. Der Handgriff ist bügelförmig und hat einen oberen Griffholm 42, der von zwei an den Stutzen 40 anschließenden Seitenwangen 43 getragen wird. Sie begrenzen zwischen sich eine Durchgrifföffnung 44 für die Hand des Benutzers. An den Stutzen und damit an die obere Austrittsöffnung 8 des vom Rohr gebildeten Magazin 7 schließt sich eine Ausstichumlenkung 45 an, die den unteren Teil des zwischen den Seitenwangen 43 gebildeten Raums einnimmt und eine gekrümmte Wandung hat, die eine seitliche Auswurföffnung 46 gegen die Hand-Durchgrifföffnung 44 abgrenzt.

Diese seitliche Auswurföffnung, die durch eine relativ sanfte Krümmung das seitliche Auswerfen der Ausstiche ohne bedeutenden Widerstand ermöglicht, sorgt dafür, daß mit dem Werkzeug praktisch kontinuierlich gearbeitet werden kann, ohne daß Zwischenentleerungen nötig sind. Wenn der Benutzer wünscht, daß die Ausstiche nicht auf den Boden fallen, so kann er sie entweder auffangen, einen Behälter dafür vorsehen oder durch diese Öffnung auch eine Entleerung durch Umkippen des Werkzeugs vornehmen. Dabei ist der Handgriff durch die Umlenkung 45 vor Verschmutzung geschützt.

Es ist zu erkennen, daß damit ein wirksames, relativ einfach aufgebautes Werkzeug geschaffen wird, das ohne bewegliche Teile arbeitet und auch unter schwierigen Bedingungen die Entfernung der Wurzelballen tiefwurzelnden Unkrauts ermöglicht. Das einzige stärker beanspruchte Teil, nämlich die Ringschneide 19, ist in einem auswechselbaren Schneideinsatz 32 vorgesehen, der aus verschleißfestem Stahl bestehen kann, während alle übrigen Teile aus Kunststoff oder Leichtmetall herzustellen sind.

Ausführungen mit kürzerem Magazin 7 können auch im übrigen einfacher gestaltet sein und beispielsweise aus einem den Stecher- und Schaftabschnitt sowie den Handgriff enthaltenen einstückigen Kunststoffteil bestehen, in das vorne ein Schneideinsatz 32 eingeschnappt wird. Der Handgriff kann dabei als einfacher Querbalken mit einer mittleren Austrittsöffnung 8 ausgebildet sein.

## Patentansprüche

1. Werkzeug (1) zum Entfernen von Unkraut (2), gekennzeichnet durch einen einen axialen Ausstichkanal (5) umgebenden mantelförmigen Stecherabschnitt (4) und einen an den Stecherabschnitt (4) anschließenden Schaftabschnitt (6), mit dem der Stecherabschnitt (4) entlang der axialen Richtung des Ausstichkanals (5) in den Boden (3) gedrückt wird.

2. Werkzeug nach Anspruch 1, dadurch gekennzeichnet, daß er mit einem Magazin (7) für den Ausstich (9) versehen ist, das sich an den axialen Ausstichkanal (5) anschließt, wobei vorzugsweise der Schaftabschnitt (6) ein Rohr ist, das gleichzeitig als Magazin (7) dient und insbesondere eine Länge von mehr als 500 mm aufweist.

3. Werkzeug nach Anspruch 2, dadurch gekennzeichnet, daß das Magazin (7) einen Austritt (8) zum Entleeren des Magazins aufweist und daß der Ausstichkanal (5) ab dem Stecherabschnitt (4) bis zum Austritt (8), sowie ggf. der Austritt (8) selbst, weiter ist als der Eintritt (10) des Stecherabschnitts (4) und/oder der Ausstichkanal (5) am Ausgang (14) des Stecherabschnitts (4) weiter ist als am Eingang (10) des Stecherabschnitts (4) und vorzugsweise konisch erweiterten Abschnitt (15) enthält.

4. Werkzeug nach einem der vorhergehenden Ansprüche, dadurch gekennzeichnet, daß der Stecherabschnitt (4) einen im wesentlichen kreisrunden Querschnitt und/oder nahe seinem Eintritt (10) einen Abschnitt (17) mit im wesentlichen konstantem, zylindrischen Durchtrittsquerschnitt aufweist.

5. Werkzeug nach einem der vorhergehenden Ansprüche, dadurch gekennzeichnet, daß der Durchmesser am Eintritt (10) des Stecherabschnitts (4) kleiner ist als 30 mm.

6. Werkzeug nach einem der vorhergehenden Ansprüche, gekennzeichnet durch Mittel (18) zur Drehkraftübertragung vom Stecherabschnitt (4) auf den Ausstich (9) und/oder zur Versteifung des Stecherabschnittes (4), insbesondere durch innere und/oder äußere axiale Profilierung des Stecherabschnitts (4).

7. Werkzeug nach einem der vorhergehenden Ansprüche, dadurch gekennzeichnet, daß der untere Rand (19, 20) des Stecherabschnittes (4) zugeschärft und/oder profiliert ist.

8. Werkzeug nach einem der vorhergehenden Ansprüche, dadurch gekennzeichnet, daß es überwiegend, ggf. vollständig, aus Kunststoff, vorzugsweise aus glasfaserverstärktem Kunststoff, besteht.

9. Werkzeug nach einem der vorhergehenden Ansprüche, dadurch gekennzeichnet, daß der Stecherabschnitt (4) und der ein Magazin (7) enthaltende Schaftabschnitt (6) ein zusammenhängendes, rohrförmiges Teil bilden, an das ein den Eintritt (10) bildender, ggf. auswechselbarer, zugeschärfter Schneideinsatz (32) ansetzbar ist.

10. Werkzeug nach einem der vorhergehenden Ansprüche, gekennzeichnet durch einen an den Schaftabschnitt (6) ansetzbaren Handgriff (26), der vorzugsweise eine Bügelform mit einer Durchgrifföffnung (44) hat.

11. Werkzeug nach einem der vorhergehenden Ansprüche, gekennzeichnet durch eine an ein Magazin (7) anschließende Umlenkung (45) mit einer seitlichen Auswurföffnung (46), die vorzugsweise im Bereich eines Handgriffs (26) vorgesehen ist.

12. Werkzeug nach einem der vorhergehenden Ansprüche, gekennzeichnet durch einen ggf. an den Schaftabschnitt (6) anklemmbaren Trittsteg (27).
